# EUROPÄISCHE PATENTSCHRIFT

(11) **EP 0 917 651 B1**
(45) Veröffentlichungstag und Bekanntmachung des Hinweises auf die Patenterteilung: **31.10.2001**
(21) Anmeldenummer: 97937557.3
(22) Anmeldetag: 06.08.1997
(51) Int. Cl.: G01P 3/36, G01C 19/68

(54) **VORRICHTUNG ZUM ERFASSEN VON MECHANISCHEN GRÖSSEN, NÄMLICH DREHWINKELN, DREHZAHLEN, WINKELGESCHWINDIGKEITEN ODER WINKELBESCHLEUNIGUNGEN**
DEVICE FOR SENSING MECHANICAL VALUES, NAMELY ANGLES AND SPEEDS OF ROTATION, ANGULAR SPEEDS AND ACCELERATIONS
DISPOSITIF DE DETECTION DE VALEURS MECANIQUES, TELLES QUE LES ANGLES ET LES VITESSES DE ROTATION, LES VITESSES OU LES ACCELERATIONS ANGULAIRES

(30) Priorität: 07.08.1996 DE 19631781
(43) Veröffentlichungstag der Anmeldung: 26.05.1999
(73) Patentinhaber: WOLTER, Klaus, D-40625 Düsseldorf (DE)
(72) Erfinder: WOLTER, Klaus, D-40625 Düsseldorf (DE)
(74) Vertreter: Cohausz & Florack
(86) Internationale Anmeldenummer: EP9704288
(87) Internationale Veröffentlichungsnummer: WO9805972

(56) Entgegenhaltungen:
- EP-A- 0 059 644
- EP-A- 0 078 931
- DE-A- 3 110 041
- US-A- 5 351 261

## Beschreibung

Die Erfindung betrifft eine Vorrichtung zum Erfassen vcn mechanischen Größen, nämlich Drehwinkeln, Drehzahlen, Winkelgeschwindigkeiten oder Winkelbeschleunigungen, mittels Auswertung der Überlagerung von mindestens zwei sich gegensinnig ausbreitenden Schwingungen einer zu der betrachteten Drehung inertialen physikalischen, insbesondere optischen, Größe.

Vorrichtungen dieser Art werden in den Patentanmeldungen EP 0 078 931 A1, DE 31 10 041 A1 und EP 0 059 644 A1 beschrieben. In den aufgeführten Druckschriften ist für eine Vorrichtung zur Erfassung von Drehbewegungsgrößen eines Systems jeweils eine Schwingungsquelle für die Ausgabe von Schwingungen vorgesehen. Aus den von dieser einen Quelle ausgegebenen Schwingungen werden mindestens zwei physikalisch miteinander gekoppelte Schwingungen gebildet, die in zwei bezüglich der Drehung des Systems gegensinnige, offene Ausbreitungspfade gespeist werden. Die Schwingungen durchlaufen den Ausbreitungspfad jeweils genau einmal, bevor sie wieder ausgekoppelt werden. Die Ermittlung der interessierenden Größen erfolgt anschließend anhand einer Auswertung der aus der Rotation des Systems resultierenden Laufzeitdifferenzen der gegensinnigen Schwingungen.

Des weiteren sind aus der Praxis sogenannte LASER-Kreisel bekannt. Es handelt sich dabei um hochpräzise und über verhältnismäßig lange Zeit stabile Vorrichtungen. Bei solchen LASER-Kreiseln wird als physikalische Größe die konstante Ausbreitungsgeschwindigkeit (Lichtgeschwindigkeit) einer elektromagnetischer Schwingung genutzt. Die Schwingung breitet sich gegensinnig entlang eines geschlossenen Pfades aus, so daß sich eine stehende Welle ergibt. Die Schwingungen sind inertial zu dem Bezugssystem, gegenüber dem sich das durch die Vorrichtung geschaffene System dreht, also nicht an das Bezugssystem gekoppelt. Dadurch wird ermöglicht, an einem Beobachtungsort, der seinerseits mit dem sich drehenden System gekoppelt ist, ein Nutzsignal zu beobachten und auszuwerten, das sich aus dem Effekt der Interferenz der gegenläufigen, überlagerten Wellenzügen ergibt.

Ein Problem bei der Verwendung von LASER-Kreiseln ist jedoch der sogenannte "Mitnahmeeffekt" (Lock-In Effekt), der die Nutzung dieser Vorrichtungen für kleine Drehraten unmöglich macht. Bei einem herkömmlichen LASER-Kreisel kommt es zu einem solchen "Mitnahmeeffekt" aufgrund von Störstellen auf dem Ausbreitungspfad. Solche Störstellen bewirken unerwünschte zusätzliche Reflexionen der umlaufenden Wellen, wodurch sich ein Mitziehen der Phasenlagen der gegensinnig umlaufenden Wellen ergibt, da stets die Wellenzüge bevorzugt werden, deren Verluste gering sind. Durch die Auswertung des Nutzsignals kann somit keine Aussage über die zu bestimmenden Größen gemacht werden. Ein solches "Nachstellen" hat eine relativ große Zeitkonstante, so daß dieser Lock-In Effekt vor allem bei geringen Drehraten zum Tragen kommt.

Zur Vermeidung dieses Effekts ist vorgeschlagen worden, bei Drehraten in Zeitbereichen unterhalb der Nachstellzeit eine Grundrotation aufzuprägen (Dither-Methode, Rate-Bias-Methode). So wird in der DE 32 24 229 ein Ringlaser beschrieben, der als Kreisel einsetzbar ist, und bei dem der "Lock-In"-Effekt durch Zitterbewegungen um den Schwerpunkt eines dreieckigen Blockes, den der Ringlaser aufweist, kompensiert werden soll.

Andererseits wird in der DE 32 22 035 vorgeschlagen, magnetooptische Biaselemente (Magnetspiegel) einzusetzen, um so steuerbare Frequenzdifferenzen zu erzielen.

Für beide Methoden werden jedoch aktive Elemente in dem Ringlaser benötigt, die eine zum Teil partielle Grundrotation des Systems ergeben, so daß der Mitnahmeeffekt umgangen wird.

In der Patentschrift US 4,135,822 wird ein weiterer Sensor zum Messen inertialer Rotation beschrieben. In dem Sensor werden von zwei Laserquellen bzw. von einer Laserquelle zwei Lichtstrahlen mit getrennt einstellbarer Frequenz generiert. Die generierten Lichtstrahlen werden in einander entgegengesetzten Richtungen in einen geschlossenen Ausbreitungspfad eingekoppelt. Anschließend werden sie wieder ausgekoppelt und mittels jeweils eines Photodetektors werden den Frequenzen der Lichtstrahlen proportionale elektrische Signale generiert. Diese elektrischen Signale werden für ein kontinuierliches Anpassen der Frequenzen der generierten Lichtstrahlen an die Frequenz des jeweils zugehörigen ausgekoppelten Lichtstrahls eingesetzt. Die so gesteuert generierten Lichtstrahlen werden zum einen weiterhin in den Ausbreitungspfad eingekoppelt und zum anderen bezüglich ihrer Frequenz verglichen und ausgewertet. Somit ist hier eine komplizierte Nachregelung erforderlich, um die für die Auswertung gewünschten Meßgrößen zu erhalten.

Der Erfindung liegt die Aufgabe zugrunde, eine Vorrichtung zu schaffen, die es erlaubt, zur Bestimmung von Drehwinkeln, Drehzahlen, Winkelgeschwindigkeiten und Winkelbeschleunigungen auf einfache Weise physikalische Größen mit hoher Genauigkeit und großer Langzeitstabilität zu erfassen, wobei auch die Erfassung kleiner Drehraten eines Objekts ohne apparative Ergänzungen durch das Einbringen aktiver Elemente in den Ringlaser ermöglicht wird.

Diese Aufgabe wird erfindungsgemäß gelöst durch eine Vorrichtung zum Erfassen von mechanischen Größen, nämlich Drehwinkeln, Drehzahlen, Winkelgeschwindigkeiten oder Winkelbeschleunigungen, mittels Auswertung der Überlagerung von mindestens zwei jeweils paarweise physikalisch voneinander entkoppelten Schwingungen einer zu der betrachteten Drehung inertialen physikalischen, insbesondere optischen, Größe, wobei die Schwingungen sich auf jeweils geschlossenen, durch Ringlaser/maser gebildeten Ausbreitungspfaden ausbreiten, wobei der Umlaufsinn der Schwingungen in einer Projektion der Ausbreitungspfade auf eine Ebene, die genau einen Schnittpunkt mit der Drehachse (D) des Systems aufweist, gegensinnig ist, und wobei die mindestens zwei sich auf den Ausbreitungspfaden ausbreitenden Schwingungenpaarweise jeweils über Auskoppelstrecken (K2, K4) auskoppelbar und erst außerhalb der Ausbreitungspfade an einem Meßort (M) überlagerbar sind, an dem das aus der Überlagerung der Schwingungen gewonnene Auswertungssignal erfaßbar ist.

Die Auswertung der Interferenzen der überlagerten Schwingungen erfolgt in der in der Praxis üblichen Weise.

Der Vorteil der erfindungsgemäßen Vorrichtung besteht darin, daß ein Mitnahmeeffekt von vornherein vermieden wird. Durch die Verwendung von zwei getrennten Ausbreitungspfaden wird erreicht, daß die beiden bezüglich der Drehachse gegensinnig und jeweils inertial umlaufenden Wellenzüge, die in den bekannten Systemen durch Überlagerung die Interferenz ergeben, von vornherein keine physikalische Wechselwirkung mit der Vorrichtung aufweisen, so daß Störstellen keinen Einfluß haben. Durch die Überlagerung des Signals außerhalb der Ausbreitungspfade wird außerdem erreicht, daß die Beobachtung des Signals keine Rückwirkung auf das aktive System hat.

Bevorzugte Ausführungsformen der Erfindung gehen aus den abhängigen Ansprüchen hervor.

Nach einer bevorzugten Ausführungsform der Erfindung ist die physikalische Größe eine optische Größe, wobei die mindestens zwei Ausbreitungspfade dieselbe optische Weglänge haben und sich auf den mindestens zwei Ausbreitungspfaden im Ruhezustand Schwingungen derselben Frequenz ausbreiten.

Die physikalische Entkopplung der Ausbreitungspfade kann nach einer ersten Alternative dadurch erfolgen, daß die mindestens zwei Ausbreitungspfade räumlich voneinander getrennt sind.

Nach einer zweiten Alternative ist vorgesehen, daß die mindestens zwei Ausbreitungspfade durch die Nutzung unterschiedlicher Polarisationen für die Schwingungen der physikalischen Größe voneinander getrennt sind.

Des weiteren ist in einer bevorzugten Ausführungsform der Erfindung ein Ringlaser/maser mit mindestens zwei über- oder nebeneinander liegenden gleichartigen geschlossenen Ausbreitungspfaden mit Eigenschwingungen derselben Frequenz und auf die Eigenschwingung bezogen gleich langem Umlaufweg und ein Bauteil mit einer nicht isotropen Durchsichtigkeit zur hinreichend starken Unterdrückung jeweils einer der beiden Ausbreitungsrichtungen der Eigenschwingungen in jedem der geschlossenen Ausbreitungspfaden zur Erreichung eines gegensinnigen Ausbreitungssinns der Eigenschwingungen um eine Drehachse in den beiden geschlossenen Ausbreitungspfaden vorgesehen. Diese Ausführungsform der erfindungsgemäßen Vorrichtung basiert auf den Standardkomponenten der bekannten LASER-Kreisel.

Eine alternative bevorzugte Ausführungsform der Erfindung zeichnet sich dadurch aus, daß in der Vorrichtung die mindestens zwei Ausbreitungspfade durch optische Leiter, insbesondere durch Glasfaserringe, gebildet werden.

Vorzugsweise umfaßt die Vorrichtung dann zwei LASER-fähige identische Glasfaserringe zur Realisierung der Ausbreitungspfade, jeweils einen als nicht isotropes Medium genutzten, einfachen, in den Zweigen des LASERS asymmetrischen optischen Koppler für jeden Glasfaserring, zur Unterdrückung jeweils einer Ausbreitungsrichtung des LASERs und zum Einkoppeln der Pumpenergie und jeweils einen weiteren Koppler zum Auskoppeln des jeweiligen Signals umfaßt. Vorteil einer solchen Vorrichtung ist, daß auf einfache Weise zwei räumlich voneinander getrennte Ausbreitungspfade geschaffen werden, zwischen denen jegliche störende Wechselwirkung ausgeschlossen werden kann.

Eine solche Vorrichtung kann in einer anderen bevorzugten Ausführungsform auch Glasfaserringe mit elliptischen Querschnitt aufweisen, derart, daß für die Schwingungen der optischen Größe zueinander orthogonale Polarisationen verwendbar sind. Die Verwendung verschiedener Polarisationen für die Schwingungen ermöglicht es, in einem einzigen Glasfaserring zwei voneinander entkoppelte Ausbreitungspfade zur Verfügung zu stellen.

Ebenfalls vorgesehen als bevorzugte Ausführungsform der Erfindung ist ein integrierter Schaltkreis, der die aktiv lasenden Lichtwellenleiter, die Koppler sowie die steuernde und auswertende Elektronik umfaßt. Auf diese Weise kann eine sehr kleine und hoch präzise Meßvorrichtung geschaffen werden.

Eine weitere bevorzugte Ausführungsform beinhaltet einen Rotor, der die Glasfaserringe und die Koppler umfaßt, sowie einen Stator, der die weiteren Bauteile der. Vorrichtung umfaßt. Dadurch wird es möglich, ein hoch präzises Gerät in einer Achse unterzubringen.

Nach weiteren alternativen bevorzugten Ausführungsform der Erfindung wird die das aktive Nutzsignal ergebende LASER-Mode jeweils im Randbereich einer Kreisscheibe, insbesondere einer Erbium-Kreisscheibe, geführt. Dadurch ergibt sich ein sogenannter 'Whispering-Mode-Laser'.

Schließlich beinhaltet nach einer weiteren bevorzugten Ausführungsform die erfindungsgemäße Vorrichtung einen Rotor, der die Kreisscheibe und die Koppler umfaßt, sowie einen Stator, der die weiteren Bauteile der Vorrichtung umfaßt. Auch hier besteht der Vorteil darin, ein hoch präzises Gerät in einer Achse unterbringen zu können.

Weitere Vorteile der Erfindung ergeben sich auch unter den nachfolgenden Gesichtspunkten:
- Die Vorrichtung ist eine Anordnung, in der mindestens eine physikalische Größe inertial, also nicht an das System der Vorrichtung gekoppelt und durch die Vorrichtung nur untergeordnet gestört, sich ausbreiten und existieren kann.
- Die Vorrichtung zeichnet sich dadurch aus, daß die Ausbreitungsmöglichkeiten für mindestens eine solche physikalische Größe in sich geschlossene Pfade beinhalten.
- Die Vorrichtung zeichnet sich dadurch aus, daß auf mindestens zwei solchen Ausbreitungspfaden die Ausbreitung mindestens einer solchen physikalischen Größe in eine der beiden Umlaufrichtungen des Ausbreitungspfades hinreichend unterdrückt werden kann.
- Die Vorrichtung zeichnet sich dadurch aus, daß sie mindestens zwei solche Ausbreitungspfade, auf denen es keine das Nutzsignal beeinflussende Wechselwirkung durch den Pfad gibt, aufweist. (Diese Pfade sind nicht notwendigerweise räumlich voneinander getrennt, wenn z.B. unterschiedliche Polarisationen genutzt werden.)
- Die Vorrichtung zeichnet sich dadurch aus, daß für mindestens zwei solcher Ausbreitungspfade jeweils eine Projektion auf eine zweidimensionale Ebene existiert, in denen die von den Projektionen umschlossenen Flächen jeweils ein von Null verschiedenes Maß aufweisen. Eine Gerade, die nur einen Punkt mit dieser Ebene gemeinsam hat, ist eine Drehachse der Vorrichtung.
- Die Vorrichtung zeichnet sich dadurch aus, daß für mindestens zwei solcher Ausbreitungspfade es mindestens eine Stelle gibt, an der die genutzten physikalischen Größen beobachtet werden können.
- Die Vorrichtung zeichnet sich dadurch aus, daß die nutzbare physikalische Größe durch eine durch die Vorrichtung meßbare Schwingung aus dem physikalischen bekannten Spektrum beobachtbar ist.
- Die Vorrichtung zeichnet sich dadurch aus, daß auf mindestens zwei solchen Ausbreitungspfaden sich im Ruhezustand Schwingungen der selben Frequenz ausbreiten können.
- Die Vorrichtung zeichnet sich dadurch aus, daß mindestens zwei solcher Ausbreitungspfade die selbe optische Weglänge haben.
- Die Vorrichtung zeichnet sich dadurch aus, daß auf mindestens zwei solcher Ausbreitungspfade die Schwingungen gegensinnig bezüglich der Drehachse umlaufen.
- Die Vorrichtung zeichnet sich dadurch aus, daß die beobachtbaren Schwingungen an einem Meßort zur Überlagerung gebracht werden und entsprechend den Vorgaben ausgewertet werden.

Die Erfindung wird im folgenden beispielhaft anhand von Zeichnungen näher erläutert. Dabei zeigen:
Fig. 1: ein erstes Ausführungsbeispiel gemäß der Erfindung mit zwei räumlich getrennten Ausbreitungspfaden in zwei Glasfaserringen
Fig. 2: ein zweites Ausführungsbeispiel gemäß der Erfindung mit durch unterschiedliche Polarisation getrennten Ausbreitungspfaden in einem gemeinsamen Glasfaserring

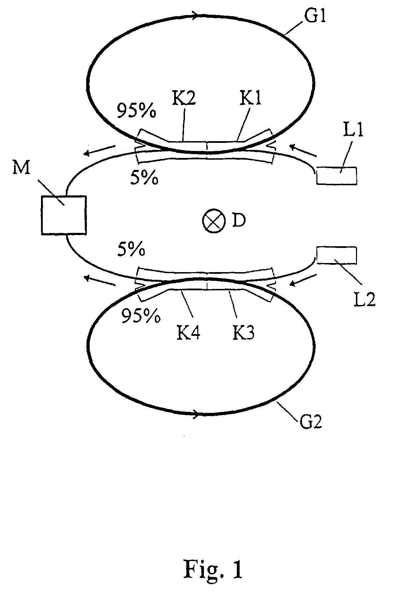

Figur 1 zeigt in einem ersten Ausführungsbeispiel zwei spiegelsymmetrische Glasfaserringe G1 und G2, die sich gegenüberliegen, sowie eine Drehachse D, um die sich das System dreht. Die Glasfaserringe G1 und G2 weisen jeweils zwei Koppler auf, von denen jeweils einer (K1 bzw. K3) eine Einkoppelfunktion und jeweils ein zweiter (K2 bzw. K4) eine Auskoppelfunktion besitzen. Die Einkoppler K1 bzw. K3 sind jeweils mit einem Pumplaser L1 bzw. L2 verbunden und die Auskoppler K2 und K4 jeweils mit einem Meßort M. Die Einkoppler K1 und K3 weisen zusätzlich eine nicht isotrope Durchsichtigkeit auf, d.h. daß die Durchlässigkeit für Laserlicht in Durchlaßrichtung ca. 95% und in entgegengesetzter Richtung ca. 5% beträgt.

Die Vorrichtung arbeitet wie folgt:

Über die Pumplaser L1 bzw. L2 und die Koppler K1 bzw. K3 wird Pumpenergie in die Glasfaserringe G1 bzw. G2 eingekoppelt, so daß in den Glasfasern G1 und G2 elektromagnetische Schwingungen auf einem geschlossenen Pfad entstehen und aufrechterhalten werden. Durch die nicht isotrope Durchsichtigkeit der Koppler K1 und K3 wird sichergestellt, daß sich die Schwingungen jeweils nur in eine Richtung ausbreiten können, wobei die Ausbreitungsrichtungen der Schwingungen in den beiden Glasfaserringen gegensinnig sein müssen. In dem Beispiel in Figur 1 ist die Ausbreitungsrichtung der Schwingung im Glasfaserring G1 im Uhrzeigersinn und die Ausbreitungsrichtung der Schwingung im Glasfaserrings G2 gegen den Uhrzeigersinn vorgesehen.

Ein Teil der Schwingungen (in dem Beispiel 5%) wird über die Koppler K2 und K4 aus den beiden geschlossenen Ausbreitungspfaden der Glasfaserringe G1 und G2 ausgekoppelt, dem Meßort (M) zugeführt und dort überlagert. Da sich im Ruhezustand auf den beiden Ausbreitungspfaden Schwingungen der selben Frequenz ausbreiten und da die Ausbreitungspfade die selbe optische Weglänge haben, was bei der Spiegelgleichheit der Glasfaserringe in der Figur 1 gegeben ist, führt die Überlagerung der beiden Schwingungen zu dem gleichen Auswertungssignal wie bei einer Vorrichtung mit einem gemeinsamen Ausbreitungspfad ohne Störungen. Die Interferenzen können also anschließend auf bekannte Weise ausgewertet werden.

Durch die voneinander unabhängigen Ausbreitungspfade für die Schwingungen kann jedoch eine Störstelle offensichtlich kein Mitziehen der Phasenlagen der gegensinnig umlaufenden Wellen verursachen, so daß ein "Lock-In"-Effekt verhindert wird.

Das Ausführungsbeispiel mit sich gegenüberliegenden Glasfaserringen wurde aufgrund der übersichtlichen Darstellungmöglichkeit gewählt. Genauso denkbar sind zwei identische Glasfaserringe, die übereinander liegen oder aber in einer beliebigen anderen Weise angeordnet sind. Es kommt lediglich darauf an, daß sich die Schwingungen bezüglich der Drehachse gegensinnig in den Ringen ausbreiten können.

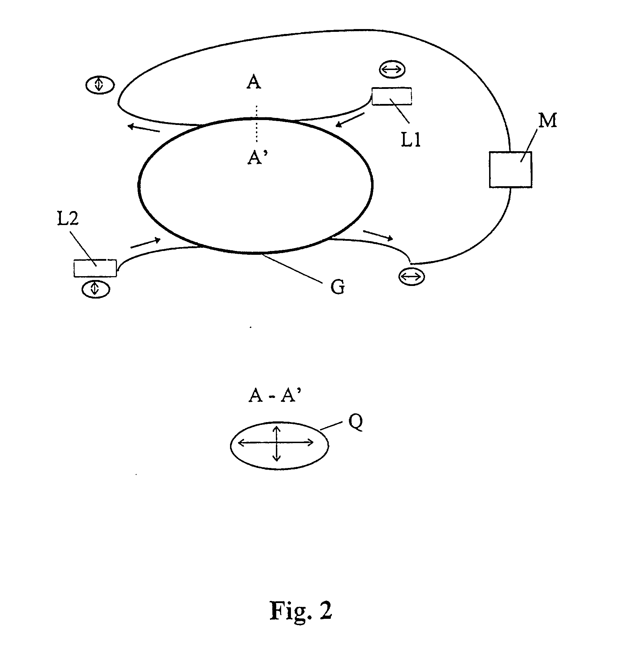

In Figur 2 wird ein weiteres Ausführungsbeispiel mit nur einem Glasfaserring G dargestellt. Über (nicht dargestellte) Koppler sind zwei einkoppelnde Verbindungen von Pumplasern L1 und L2 sowie zwei über (ebenfalls nicht dargestellte) Koppler auskoppelnde Verbindungen zu einem Meßort M vorgesehen. Der Glasfaserring G weist einen ovalen Querschnitt Q auf, wie aus der Darstellung des Schnitts A-A' deutlich wird.

Die Funktionsweise des zweiten Beispiels entspricht prinzipiell der des ersten Beispiels. Der Unterschied zu dem Beispiel aus Figur 1 besteht darin, daß hier ein einziger Glasfaserring für die beiden gegensinnig zu durchlaufenden, voneinander entkoppelten Ausbreitungspfade der Schwingungen verwendet wird. Die erfindungsgemäße Trennung der beiden Ausbreitungspfade erfolgt hier über zwei unterschiedliche, zueinander orthogonale Polarisationen der beiden eingekoppelten Schwingungen, wie in Querschnitt Q dargestellt. In dem Beispiel in Figur 2 besitzt die über den Pumplaser L1 eingekoppelte, entgegen dem Uhrzeigersinn umlaufende Schwingung eine Polarisation in Querrichtung des elliptischen Glasfaserquerschnitts und die über den Pumplaser L2 eingekoppelte, im Uhrzeigersinn umlaufende zweite Schwingung eine Polarisation in Längsrichtung des elliptischen Glasfaserquerschnitts. Vor der Überlagerung am Meßort M müssen in diesem Fall die Polarisationen noch in Übereinstimmung gebracht werden. Danach erfolgt die Überlagerung und die Auswertung der Interferenzeffekte wieder in bekannter Weise.

Aufgrund der unterschiedlichen Polarisationen sind hier ebenso wie in dem Beispiel in Figur 1 die Ausbreitungspfade der gegensinnig umlaufenden Schwingungen voneinander entkoppelt, so daß auch hier bei Störstellen kein Mitziehen der Phasenlagen der gegensinnig umlaufenden Wellen auftreten kann und der "Lock-In"-Effekt vermieden wird.

## Patentansprüche

1. Vorrichtung zum Erfassen von mechanischen Größen, nämlich Drehwinkeln, Drehzahlen, Winkelgeschwindigkeiten oder Winkelbeschleunigungen, mittels Auswertung der Überlagerung von mindestens zwei jeweils paarweise physikalisch voneinander entkoppelten Schwingungen einer zu der betrachteten Drehung inertialen physikalischen, insbesondere optischen, Größe, wobei die Schwingungen sich auf jeweils geschlossenen, durch Ringlaser/maser gebildeten Ausbreitungspfaden ausbreiten, wobei der Umlaufsinn der Schwingungen in einer Projektion der Ausbreitungspfade auf eine Ebene, die genau einen Schnittpunkt mit der Drehachse (D) des Systems aufweist, gegensinnig ist, und wobei die mindestens zwei sich auf den Ausbreitungspfaden ausbreitenden Schwingungen paarweise jeweils über Auskoppelstrecken (K2, K4) auskoppelbar und erst außerhalb der Ausbreitungspfade an einem Meßort (M) überlagerbar sind, an dem das aus der Überlagerung der Schwingungen gewonnene Auswertungssignal erfaßbar ist.

2. Vorrichtung nach Anspruch 1, **dadurch gekennzeichnet, daß** die physikalische Größe eine optische Größe ist, wobei die mindestens zwei Ausbreitungspfade dieselbe optische Weglänge haben und sich auf den mindestens zwei Ausbreitungspfaden im Ruhezustand Schwingungen derselben Frequenz ausbreiten.

3. Vorrichtung nach Anspruch 1 oder 2, **dadurch gekennzeichnet, daß** die mindestens zwei Ausbreitungspfade räumlich voneinander getrennt sind.

4. Vorrichtung nach Anspruch 1 oder 2, **dadurch gekennzeichnet, daß** die mindestens zwei Ausbreitungspfade durch die Nutzung unterschiedlicher Polarisationen für die Schwingungen der physikalischen Größe voneinander getrennt sind.

5. Vorrichtung nach einem der vorangehenden Ansprüche, **gekennzeichnet durch**
- einen Ringlaser/maser mit mindestens zwei über- oder nebeneinander liegenden gleichartigen geschlossenen Ausbreitungspfaden mit Eigenschwingungen derselben Frequenz und auf die Eigenschwingung bezogen gleich langem Umlaufweg und
- ein Bauteil (K1, K3) mit einer nicht isotropen Durchsichtigkeit zur hinreichend starken Unterdrückung jeweils einer der beiden Ausbreitungsrichtungen der Eigenschwingungen auf jedem der geschlossenen Ausbreitungspfaden zur Erreichung eines gegensinnigen Ausbreitungssinns der Eigenschwingungen auf den beiden geschlossenen Ausbreitungspfaden.

6. Vorrichtung nach einem der Ansprüche 2-5, **dadurch gekennzeichnet, daß** die mindestens zwei Ausbreitungspfade durch optische Leiter, insbesondere durch Glasfaserringe (G, G1, G2), gebildet werden.

7. Vorrichtung nach Anspruch 6, **gekennzeichnet durch**
- zwei LASER-fähige identische Glasfaserringe (G1, G2) zur Realisierung der Ausbreitungspfade,
- jeweils einen als nicht isotropes Medium genutzten, einfachen, in den Zweigen des LASERs asymmetrischen optischen Koppler (K1, K3) für jeden Glasfaserring (G1, G2), zur Unterdrückung jeweils einer Ausbreitungsrichtung des LASERs und zum Einkoppeln der Pumpenergie und
- jeweils einen weiteren Koppler (K2, K4) zum Auskoppeln des jeweiligen Signals.

8. Vorrichtung nach Anspruch 6, **dadurch gekennzeichnet, daß** die Glasfaserringe (G) einen elliptischen Querschnitt (Q) aufweisen, derart, daß für die Schwingungen der optischen Grö**ß**e zueinander orthogonale Polarisationen verwendbar sind.

9. Vorrichtung nach einem der Ansprüche 6-8, **gekennzeichnet durch** einen integrierten Schaltkreis, der die aktiv lasenden Lichtwellenleiter (G, G1, G2), die Koppler (K1, K2, K3, K4) sowie die steuernde und auswertende Elektronik umfaßt.

10. Vorrichtung nach einem der Ansprüche 6 -8, **gekennzeichnet durch** einen Rotor, der die Glasfaserringe (G, G1, G2) und die Koppler (K1, K2, K3, K4) umfaßt, sowie einen Stator, der die weiteren Bauteile der Vorrichtung umfaßt.

11. Vorrichtung nach einem der Ansprüche 2-4, **dadurch gekennzeichnet, daß** die das aktive Nutzsignal ergebende LASER-Mode jeweils im Randbereich einer Kreisscheibe, insbesondere einer Erbium-Kreisscheibe, geführt wird.

12. Vorrichtung nach Anspruch 11, **gekennzeichnet durch** einen Rotor, der die Kreisscheibe und die Koppler (K1, K2, K3, K4) umfaßt, sowie einen Stator, der die weiteren Bauteile der Vorrichtung umfaßt.

13. Vorrichtung nach Anspruch 1, **dadurch gekennzeichnet, daß** in die durch die Ringlaser/maser gebildeten Ausbreitungspfade jeweils über einen Pumplaser Energie zur Erzeugung und Aufrechterhaltung der Schwingungen einkoppelbar ist.

## Claims

1. A device for acquiring mechanical variables, specifically angles of rotation, speeds, angular velocities or angular accelerations, by evaluating the superposition of at least two oscillations, physically decoupled in pairs, of a physical, in particular optical, variable inertial to the examined rotation, wherein the oscillations propagate along closed propagation paths formed by annular lasers/masers, the oscillations rotate in opposite directions in a projection of the propagation paths on a plane that exhibits precisely one point of intersection with the rotational axis (D) of the system, and the at least two oscillations propagating along the propagation paths can each be decoupled in pairs on decoupling segments (K2, K4) and only become superposable outside the propagation paths at a measuring location (M) where the evaluation signal obtained from superposing the oscillations is detectable.

2. Device according to Claim 1, **characterized by** the fact that the physical variable is an optical variable, wherein the at least two propagation paths have the same optical path length, and oscillations of the same frequency propagate on the at least two propagation paths in the idle state.

3. Device according to Claim 1 or 2, **characterized by** the fact that the at least two propagation paths are spatially separated from each other.

4. Device according to Claim 1 or 2, **characterized by** the fact that the at least two propagation paths are separated from each other by using varying polarizations for the oscillations of the physical variable.

5. Device according to one of the preceding claims, **characterized by**:
- an annular laser/maser with at least two superposed or contiguous similar, closed propagation paths with oscillations of the same frequency and a rotational path of identical length relative to the natural oscillation, and
- a component (K1, K3) with a non-isotropic transparency to sufficiently suppress one of the two directions of propagation for the natural oscillations on each of the closed propagation paths in order to achieve an opposite direction of propagation for the natural oscillations on the two closed propagation paths.

6. Device according to one of Claims 2-5, **characterized by** the fact that the at least two propagation paths are formed by optical conductors, in particular by fiberglass rings (G, G1, G2).

7. Device according to Claim 6, **characterized by**:
- two laser-compatible, identical fiberglass rings (G1, G2) for achieving the propagation paths,
- a simple optical coupler (K1, K3) for each fiberglass ring (G1, G2), which does not serve as an isotropic medium and runs asymmetrically in the branches of the laser, in order to suppress one respective direction of propagation of the laser and couple the pump energy, and
- one other coupler (K2, K4) to decouple the respective signal.

8. Device according to Claim 6, **characterized by** the fact that the fiberglass rings (G) exhibit an elliptical cross section (Q), which permit the use of mutually orthogonal polarizations for the oscillations of the optical variable.

9. Device according to one of Claims 6-8, **characterized by** an integrated circuit, which encompasses the actively lasing optical waveguides (G, G1, G2), the couplers (K1, K2, K3, K4) along with the controlling and evaluating electronics.

10. Device according to one of Claims 6-8, **characterized by** a rotor, which encompasses the fiberglass rings (G, G1, G2) and couplers (K1, K2, K3, K4), and a stator, which encompasses the remaining components of the device.

11. Device according to one of Claims 2-4, **characterized by** the fact that the laser mode that generates the active useful signal is executed in the boundary area of a circular disk, in particular an erbium circular disk.

12. Device according to Claim 11, **characterized by** a rotor, which encompasses the circular disk and couplers (K1, K2, K3, K4), and a stator, which encompasses the remaining components of the device.

13. Device according to Claim 1, **characterized by** the fact that a pump laser can be used to couple in energy to generate and maintain the oscillations in the propagation paths formed by the ring laser/maser.

## Revendications

1. Dispositif pour détecter des grandeurs mécaniques, à savoir des angles de rotation et des vitesses de rotation, des vitesses angulaires ou des accélérations angulaires; au moyen d'une évaluation de la superposition d'au moins deux oscillations découplées physiquement l'une de l'autre respectivement par couples, d'une grandeur physique, notamment optique, inertielle par rapport à la rotation observée, dans lequel les oscillations se propagent sur des trajets de propagation respectivement fermés, formés par un laser/maser en anneau, et dans lequel les sens de circulation des oscillations dans une projection des trajets de propagation dans un plan qui présente précisément un point d'intersection avec l'axe de rotation (D) du système, sont réciproquement opposés, et selon lequel les au moins deux oscillations, qui se propagent sur les trajets de propagation, peuvent être découplées par couples respectivement par l'intermédiaire de sections de découplage (K2, K4) et peuvent être superposées uniquement à l'extérieur des trajets de propagation en un lieu de mesure (M), sur lequel le signal d'évaluation obtenu par la superposition des oscillations peut être détecté.

2. Dispositif selon la revendication 1,
**caractérisé en ce que** la grandeur physique est une grandeur optique, les au moins deux trajets de propagation possédant la même longueur de trajet optique, tandis qu'à l'état de repos, des oscillations de même fréquence se propagent sur les au moins deux trajets de propagation.

3. Dispositif selon la revendication 1 ou 2,
**caractérisé en ce que** les au moins deux trajets de propagation sont séparés l'un de l'autre dans l'espace.

4. Dispositif selon la revendication 1 ou 2,
**caractérisé en ce que** les au moins deux trajets de propagation sont séparés l'un de l'autre grâce à l'utilisation de polarisations différentes pour les oscillations de la grandeur physique.

5. Dispositif selon l'une des revendications précédentes, **caractérisé par**
- un laser/maser en anneau comportant au moins deux trajets de propagation identiques fermés, qui sont superposés ou juxtaposés, avec des oscillations propres ayant la même fréquence et avec le trajet de circulation de même longueur rapportée à l'oscillation propre, et
- un composant (K1, K3) possédant une transparence non isotrope pour réaliser une réduction, à un degré suffisant, respectivement dans l'une des deux directions de propagation, des oscillations propres sur chacun des trajets de propagation fermés pour l'obtention de sens de propagation réciproquement opposés des oscillations propres dans les deux trajets de propagation fermés.

6. Dispositif selon l'une des revendications 2 à 5, **caractérisé en ce que** les au moins deux trajets de propagation sont formés par des conducteurs optiques, notamment par des anneaux de fibres de verre (G, G1, G2).

7. Dispositif selon la revendication 6,
**caractérisé par**
- deux anneaux de fibres de verre (G1, G2) identiques, aptes à produire l'effet LASER, pour la réalisation des trajets de propagation,
- respectivement un coupleur optique simple (K1, K3), qui est utilisé en tant que milieu non isotrope et est dissymétrique dans les branches du LASER, pour chaque anneau de fibre de verre (G1, G2), pour supprimer respectivement une direction de propagation du LASER et pour injecter l'énergie de pompage, et
- respectivement un autre coupleur (K2, K4) servant à découpler le signal respectif.

8. Dispositif selon la revendication 6,
**caractérisé en ce que** les anneaux de fibre de verre (G) possèdent une section transversale elliptique (Q) de telle sorte que des polarisations réciproquement orthogonales peuvent être utilisées pour les oscillations de la grandeur optique.

9. Dispositif selon l'une des revendications 6 à 8, **caractérisé par** un circuit intégré, qui comprend les guides d'ondes lumineuses (G, G1, G2) produisant un effet laser actif, les coupleurs (K1, K2, K3, K4) ainsi que le système électrique de commande et d'exploitation.

10. Dispositif selon l'une des revendications 6 à 8, **caractérisé par** un rotor qui comprend les anneaux de fibres de verre (G, G1, G2) et les coupleurs (K1, K2, K3, K4), ainsi que par un stator qui comporte les autres composants du dispositif.

11. Dispositif selon l'une des revendications 2 à 4, **caractérisé en ce que** le mode LASER fournissant le signal utile actif est guidé respectivement dans la zone marginale d'un disque circulaire, notamment d'un disque circulaire en erbium.

12. Dispositif selon la revendication 11,
**caractérisé par** un rotor qui comprend le disque circulaire et les coupleurs (K1, K2, K3, K4), ainsi que par un stator qui comprend les autres composants du dispositif.

13. Dispositif selon la revendication 1,
**caractérisé en ce que** l'énergie servant à produire et maintenir les oscillations peut être injectée dans les trajets de propagation formés par le laser/maser en anneau, respectivement par l'intermédiaire d'un laser de pompage.
